# EUROPEAN PATENT SPECIFICATION

(11) **EP 2 472 140 B1**
(45) Date of publication and mention of the grant of the patent: **24.07.2019**
(21) Application number: 10811418.2
(22) Date of filing: 10.06.2010
(51) Int. Cl.: F16F 9/32, E05F 3/04, F16F 9/34, F16F 9/348, F16F 9/512

(54) **LIQUID DAMPER DEVICE**
FLÜSSIGKEITSDÄMPFUNGSVORRICHTUNG
DISPOSITIF AMORTISSEUR À LIQUIDE

(30) Priority: 24.08.2009 JP 2009193546
(43) Date of publication of application: 04.07.2012
(73) Proprietor: Fuji Latex Co., Ltd., Chiyoda-ku, Tokyo 101-0054 (JP)
(72) Inventor: NAKAYA, Shinichiro, Tokyo 101-0054 (JP); SUMIYOSHI, Takayuki, Tokyo 101-0054 (JP)
(74) Representative: Oppermann, Frank
(86) International application number: PCT/JP2010/003886
(87) International publication number: WO 2011/024359

(56) References cited:
- WO-A1-2009/078791
- JP-A- H11 280 819
- JP-A- 2005 299 791
- JP-A- 2005 299 791
- JP-A- 2008 057 685
- JP-A- 2008 057 685
- JP-Y1- 45 023 099
- US-A- 5 769 192

## Description

### TECHNICAL FIELD

The present invention relates to a liquid damper device for damping the movement of a movable member such as door.

### BACKGROUND TECHNOLOGY

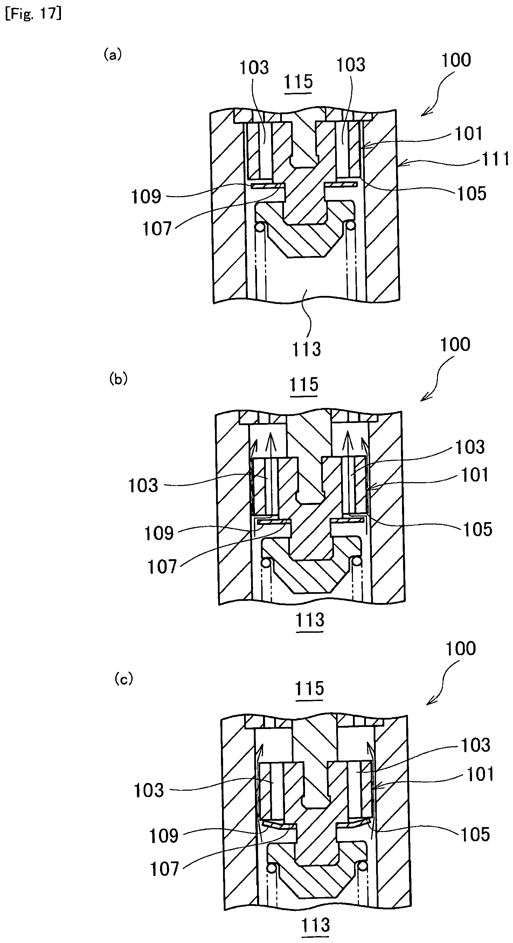

There is a conventional liquid damper device illustrated in Fig. 17 that is similar to a liquid damper device disclosed in a Patent Literature 1. Fig. 17 is a sectional view illustrating an essential part of a piston and the perimeter in which Fig. 17(a) is in a stationary state of a damper, Fig. 17(b) is in a transition state from a medium stage to a latter stage of the piston moving toward a pressure chamber to shrink the damper, and Fig. 17(c) is a transition state from an initial stage to the medium stage of the piston moving toward the pressure chamber to shrink the damper.

As illustrated in Fig. 17, a liquid damper device 100 has a piston 101 with a stepped protrusion 107 in an inner side of a surface 105 on which reflux passages 103 (flow passages) open and a plate 109 (valve body) configured to come into contact with the protrusion 107 to narrow down a flow rate of a working fluid such as silicone oil.

When the piston 101 moves toward a pressure chamber 113 in a cylinder 111, the plate 109 receives a pressure of the silicone oil and moves to come into contact with the protrusion 107. Due to this contact, at low load, it forms a fixed gap between the plate 109 and the piston 101 as illustrated in Fig. 17(b).

The silicone oil in the pressure chamber 113 is narrowed down by the gap between the plate 109 and piston 101 and then passes through the reflux passages 103 to a contra pressure chamber 115 side. The silicone oil in the pressure chamber 113 also moves to the contra pressure chamber 115 side through a gap between an outer peripheral surface of the piston 101 and an inner peripheral surface of the cylinder 111.

With these movements, the silicone oil provides the piston 101 with a drag so that it damps the movement of the piston 101.

At high load, the plate 109 bends by a pressure from the silicone oil to bring an outer periphery into contact with the surface 105 of the piston 101 as illustrated in Fig. 17(c). With this contact, the reflux passages 103 are closed so that the working fluid moves through only the gap between the outer peripheral surface of the piston 101 and the inner peripheral surface of the cylinder 111 to increase a drag to the piston.

If this liquid damper 100 is applied to a sliding door, it reduces speed of the sliding door just before being completely shut. This prevents the sliding door from generating noise and being shut on fingers hardly. If the liquid damper device 100 is applied to a drawer, it reduces speed of the drawer just before being completely shut to prevent the drawer from generating noise and from moving objects stored therein.

Therefore, the liquid damper device 100 applied to the sliding door (drawer) is in an initial stage in which it starts to operate at the high load due to the sliding door (drawer) with the high speed just before being completely shut. In the initial stage, the sliding door moves at high speed to generate the high load. It increases the drag as illustrated in Fig. 17(c) and strongly damps the sliding door (drawer) to reduce the speed.

Due to this damping, the speed of the sliding door (drawer) is reduced to generate the low load, so that it lightly damps the sliding door (drawer) as illustrated in Fig. 17(b). The liquid damper device 100 enables the sliding door (drawer) to be silently and smoothly shut in a short time.

According to this structure, however, the plate 109 receives a reaction force by constraint at a portion being in contact with a corner on the edge of the protrusion 107. The reaction force repeatedly acts on the portion of the plate 109 in the operation of the liquid damper device 100 to decrease durability of the plate 109.

The plate 109 bens in a state that the inner side of the plate 109 is supported with the corner on the edge of the protrusion 107, so that the plate 109 requires higher load to be bent. This limits an adjustable range of a damping characteristic based on the relationship between a drag and a moving speed of the piston 101.

### CITATION LIST

### PATENT LITERATURE

PATENT LITERATURE 1: JP 2006-118651 A

### SUMMARY OF INVENTION

### PROBLEMS TO BE SOLVED BY INVENTION

A problem to be solved by the invention is that a liquid damper device, although it enables a movement of a movable member to be silently completed, has a disadvantage in durability of a valve body and limits an adjustable range of a damping characteristic based on a relationship between a drag and a moving speed of a piston.

JP H11 280819 A discloses a shock absorber comprising a valve for allowing hydraulic liquid to flow in both cases of extension and retraction of a piston rod. The valve comprises a flexible valve body. The outer peripheral part of the flexible valve body is bent upward during retraction, and the inner peripheral part of the flexible valve body is bent downward during extension. The valve comprises an outer peripheral valve seat and an inner concave portion allowing a movement of the fulcrum of the flexible valve body under high pressure load.

### MEANS TO SOLVE THE PROBLEM

The present invention enables a movement of a movable member to be silently completed, increases the durability of a valve body and expands an adjustable range of a damping characteristic based on a relationship between a drag and a moving speed of a piston. To achieve this, the present invention has a cylinder in which a working fluid is enclosed, a piston disposed in the cylinder to divide an inside of the cylinder into a pressure chamber side and a contra pressure chamber side and movable toward the pressure chamber side and the contra pressure chamber side, the piston being provided with a piston rod protruding outwardly from the cylinder, a flow passage formed through the piston to communicate with the pressure chamber side and the contra pressure chamber side so that the working fluid moves to the pressure chamber side or the contra pressure chamber side to cause a pressure to be adjusted, a flexible valve body operating toward a closing position with respect to the flow passage when the piston moves toward the pressure chamber side and operating toward an opening position with respect to the flow passage when the piston moves toward the contra pressure chamber side, characterized in that convex surface portions are formed on an outer peripheral portion of a surface of the piston in the pressure chamber side to support an outer peripheral portion of the valve body, and a concave surface portion is formed on the surface of the piston in the pressure chamber side to allow a gap for narrowing down to be defined between the valve body and the concave surface portion in a state of the valve body supported with the convex surface portions to open the flow passage.

### EFFECT OF INVENTION

The present invention has a cylinder in which a working fluid is enclosed, a piston disposed in the cylinder to divide an inside of the cylinder into a pressure chamber side and a contra pressure chamber side and movable toward the pressure chamber side and the contra pressure chamber side, the piston being provided with a piston rod protruding outwardly from the cylinder, a flow passage formed through the piston to communicate with the pressure chamber side and the contra pressure chamber side so that the working fluid moves to the pressure chamber side or the contra pressure chamber side to cause a pressure to be adjusted, a flexible valve body operating toward a closing position with respect to the flow passage when the piston moves toward the pressure chamber side and operating toward an opening position with respect to the flow passage when the piston moves toward the contra pressure chamber side, characterized in that convex surface portions are formed on an outer peripheral portion of a surface of the piston on the pressure chamber side to support an outer peripheral portion of the valve body, and a concave surface portion is formed on the surface of the piston in the pressure chamber side to allow a gap for narrowing down to be defined between the valve body and the concave surface portion in a state of the valve body supported with the convex surface portions to open the flow passage.

When the piston moves toward the pressure chamber side in the cylinder, the valve body therefore receives a pressure of the working fluid and moves to come into contact with the convex surface portions. With this contact, a fixed gap is formed between the valve body and the concave surface portion of the piston at low load.

At the low load with a moving speed of the piston being low, the working fluid in the pressure chamber is narrowed down by the gap between the valve body and the piston and then passes through the flow passage to the contra pressure chamber side. The working fluid also moves to the contra pressure chamber side through a gap between an outer peripheral surface of the piston and an inner peripheral surface of the cylinder.

Due to these movements of the working fluid, the working fluid provides the piston with a drag to lightly damp the movement of the piston.

At high load with a moving speed of the piston being high, the valve body bends at a middle portion between the convex surface portions by a pressure of the working fluid and comes into contact also with the concave surface portion of the piston. With this contact, the flow passage is closed so that movement of the working fluid is performed almost exclusively through the gap between the outer peripheral surface of the piston and the inner peripheral surface of the cylinder, to increase the drag of the working fluid to the piston.

The valve body therefore is in contact with the concave surface portion even if it closes the flow passage. This generates no force by constraint due to a contact with a corner, to increase durability of the valve body.

Additionally, the valve body bends along the concave surface portion to close the flow passage. This reduces a required force for bending the valve body, to expand an adjustable range of a damping characteristic based on a relationship between a drag and a moving speed of the piston.

### BRIEF DESCRIPTION OF THE DRAWINGS

[Figure 1] It is a sectional view illustrating a liquid damper device in an extending operation (Embodiment 1).
[Figure. 2] It is a sectional view illustrating the liquid damper device in a shrinking operation (Embodiment 1).
[Figure. 3] It is a perspective view illustrating a relationship between a piston and a valve body (Embodiment 1).
[Figure. 4] It is an exploded perspective view illustrating the relationship between the piston and the valve body (Embodiment 1).
[Figure. 5] It is an exploded perspective view illustrating the relationship between the piston and the valve body (Embodiment 1).
[Figure. 6] It is an enlarged side view of the piston (Embodiment 1).
[Figure. 7] It is an enlarged end view of the piston (Embodiment 1).
[Figure. 8] It is a sectional view taken along a line VIII-VIII of Fig. 6 (Embodiment 1).
[Figure. 9] It is an assembly drawing illustrating a sliding door in which a door closer retracting unit is attached, the door closer retracting unit that is provided with the liquid damper device (Embodiment 1).
[Figure. 10] It shows the door closer retracting unit and the perimeter in an operating state in which Fig. 10(a) is an enlarged view in a state starting to retract the sliding door and Fig. 10(b) is an enlarged view in a completely-shut state of the sliding door (Embodiment 1).
[Figure. 11] It is an assembly drawing illustrating a drawer in which a retracting unit is attached, the retracting unit that is provided with the liquid damper device (Embodiment 1).
[Figure. 12] It is an enlarged perspective view illustrating the retracting unit (Embodiment 1).
[Figure. 13] It illustrates a piston and the perimeter when the damper is stationary in which Fig. 13(a) is an enlarged sectional view of the essential parts corresponding to Fig. 8 and Fig. 13(b) is an enlarged sectional view orthogonally illustrating the essential parts with respect to Fig. 13(a) (Embodiment 1).
[Figure. 14] It illustrates in a transition state from a medium stage to a latter stage of the piston moving toward a pressure chamber side in which Fig. 14(a) is an enlarged sectional view of the essential parts corresponding to Fig. 8 and Fig. 14(b) is an enlarged sectional view orthogonally illustrating the essential parts with respect to Fig. 14(a) (Embodiment 1).
[Figure. 15] It illustrates in a transition state from an initial stage to the medium stage of the piston moving toward the pressure chamber side in which Fig. 15(a) is an enlarged sectional view of the essential parts corresponding to Fig. 8 and Fig. 15(b) is an enlarged sectional view orthogonally illustrating the essential parts with respect to Fig. 15(a) (Embodiment 1).
[Figure. 16] It is a graph illustrating a relationship between a drag and a moving speed of the piston during an operating state as well as a comparative example (Embodiment 1).
[Figure. 17] It illustrates a piston and the perimeter of a damper in which Fig. 17(a) is a sectional view of essential parts at the damper being stationary, Fig. 17(b) is a sectional view of the essential parts in a transition state from a medium stage to a latter stage of the piston moving toward a pressure chamber side to shrink the damper, and Fig. 17(c) is a sectional view of the essential parts in a transition state from an initial stage to the medium stage of the piston moving toward the pressure chamber side to shrink the damper (Related Art).

### EMBODIMENT OF IMPLEMENTING INVENTION

An embodiment of the present invention realizes the object enabling a movement of a movable member to be silently completed, increasing the durability of a valve body and expanding an adjustable range of a damping characteristic based on a relationship between a drag and a moving speed of a piston by means of convex surface portions and a concave surface portion formed on a surface of a piston on which a flow passage opens.

### EMBODIMENT 1

### [General Structure of Liquid Damper Device]

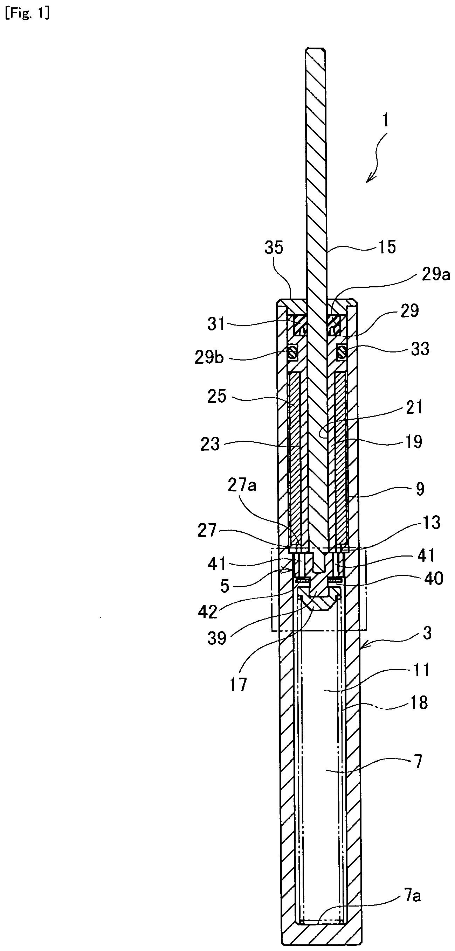

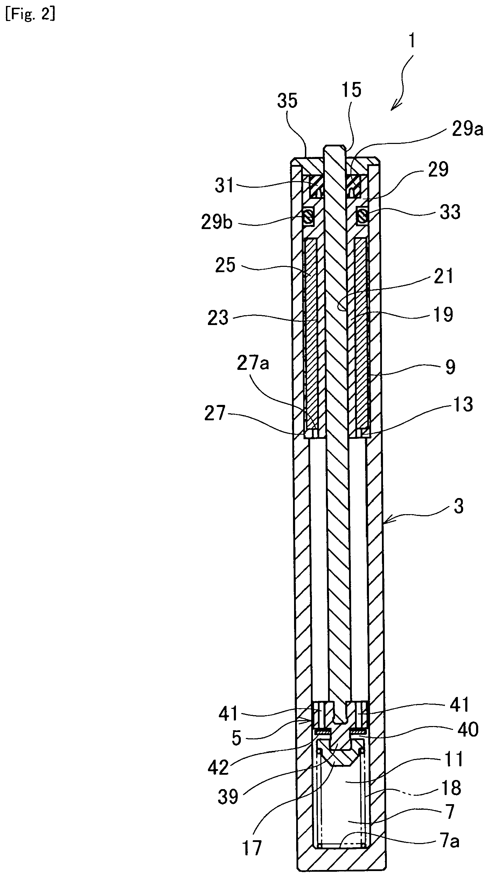

Figures 1 and 2 illustrates a liquid damper device according to the embodiment 1 of the present invention in which Fig. 1 is a sectional view in an extending state and Fig. 2 is a sectional view in a shrinking state.

The liquid damper device 1 according to the embodiment has a cylinder 3 and a piston 5 as illustrated in Figs. 1 and 2.

The cylinder 3 is formed into a tubular shape and includes inside a small diameter portion 7 and a large diameter portion 9 that are continuously formed in an axial direction.

In the small diameter portion 7, a working fluid such as silicone oil is enclosed and the piston 5 is disposed to divide the inside of the cylinder 3 into a pressure chamber 11 and a contra pressure chamber 13. The piston 5 is movable toward the pressure chamber 11 side and the contra pressure chamber 13 side and has a piston rod 15 protruding outwardly from the cylinder 3.

A spring seat 17 is fixed to the piston 5 in the small diameter portion 7. Between the spring seat 17 and an end wall face 7a of the small diameter portion 7, a return spring 18 is disposed to push the piston 5 toward the contra chamber 13 side.

In the large diameter portion 9 of the cylinder 3, a rod guide 19 is fitted in the contra pressure chamber 13 side. The rod guide 19 is formed into a hollow tubular shape and has a through hole 21 on an axis thereof. On the inner peripheral side of the rod guide 19, the piston rod 15 passes through the through hole 21. On the outer peripheral side of the rod guide 19, a recessed portion 23 is formed circumferentially. The recessed portion 23 accommodates an accumulator such as rubber with closed pores.

The rod guide 19 includes a flange 27 at one end in the axial direction and an expanded diameter portion 29 at the other end. The flange 27 is fits to an inner peripheral surface of the large diameter portion 9 in the contra pressure chamber 13 side. The flange 27 has communicating holes 27a formed through the flange 27 so that the recessed portion 23 communicates with the contra pressure chamber 13. The communicating holes 27a lead the silicone oil into the recessed portion 23 of the rod guide 19 and the accumulator 25 absorbs a volumetric change in the contra pressure chamber 13 through the leading.

The expanded diameter portion 29 at the other end is provided with a seal receiver 29a into which a seal member 31 such as U-packing seal is fitted and held, so that the seal member 31 is in slidably contact with the piston rod 15. On an outer periphery of the expanded diameter portion 29, an annular groove 29b is formed. In the annular groove 29b, a seal member 33 such as O-ring is held. Adjacent to the expanded diameter portion 29, a cap 35 is attached to an open end of the cylinder 3 to retain the rod guide 19 and the like.

### [Piston]

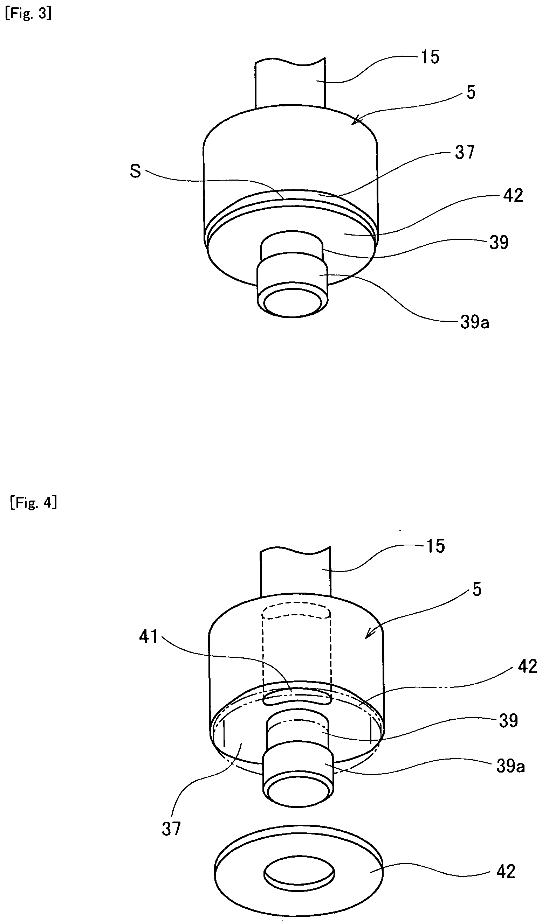

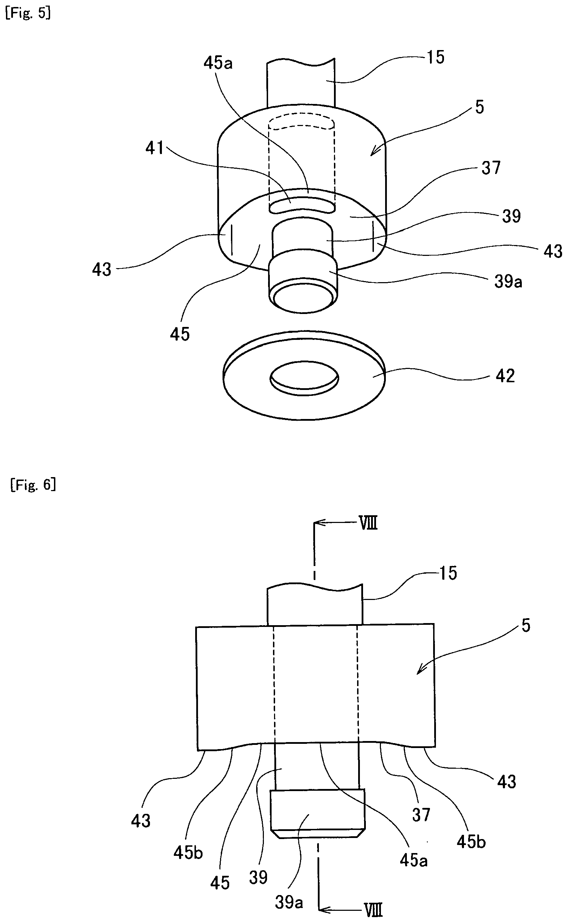

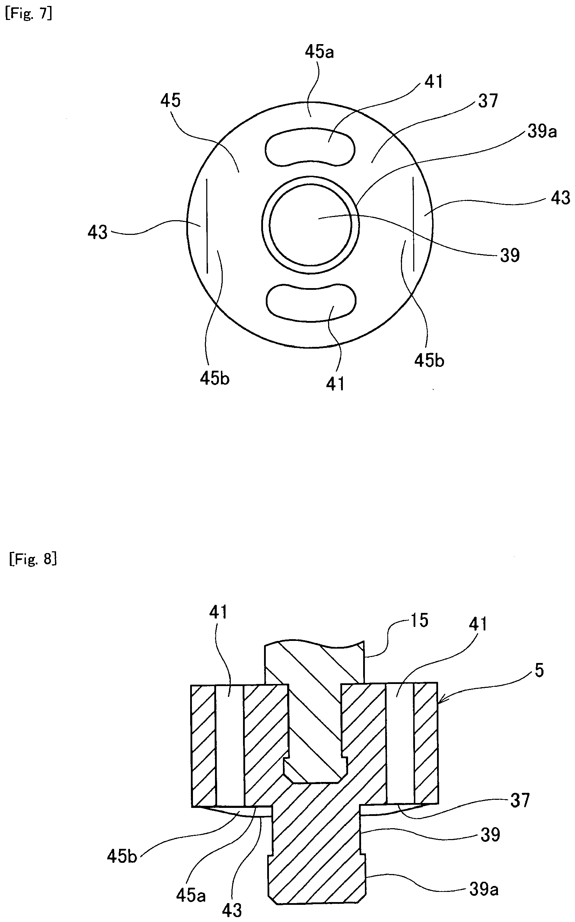

Fig. 3 is a perspective view illustrating a relationship between the piston and a valve body, Figs. 4 and 5 are exploded perspective views each illustrating the relationship between the piston and the valve body, Fig. 6 is an enlarged side view of the piston, Fig. 7 is an enlarged end view of the piston, and Fig. 8 is a sectional taken along a line VIII-VIII of Fig. 6.

As illustrated in Figs. 1-8, the piston 5 is provided with a stepped and projected shaft portion 39 protruding from a center portion of a surface 37 in the pressure chamber 11 side. The projected shaft portion 39 has a head portion 39a to which the spring seat 17 is fixed by, for example, press fitting. Between the spring seat 17 and the surface 37 of the piston 5, a gap 40 is defined.

The piston 5 includes plural flow passages 41. e.g., a pair of flow passages 41 formed through the piston 5. The flow passages 41 communicate with the pressure chamber 11 side and the contra pressure chamber side 13 to allow the silicone oil to move to the pressure chamber 11 side or the contra pressure chamber 13 side to cause a pressure to be adjusted.

A valve body 42 has a doughnut-shaped plate and is fitted to the projected shaft portion 39 so that the valve body 42 is disposed between the spring seat 17 and the surface 37. The valve body 42 is made of PET(resin material) and is flexible. The valve body 42 has an outer diameter equal to or slightly smaller than that of the piston 5.

The valve body 42 operates toward a closing position with respect to the flow passages 41 when the piston 5 moves toward the pressure chamber 11 side and operates toward an opening position with respect to the flow passages 41 when the piston 5 moves toward the contra pressure chamber 13 side.

Convex surface portions 43 are formed on the outer peripheral portion of the surface 37 of the piston 5 in the pressure chamber 11 side. The convex surface portions 43 are positioned at two portions opposite to each other in a diametral direction of the piston 5, respectively. The convex surface portions 43 locally support an outer peripheral portion of the valve body 43 at two points.

A concave surface portion 45 is formed on the surface 37 of the piston 5 in the pressure chamber 11 side to allow a gap S for narrowing down to be defined between the valve body 42 and the concave surface portion 45 in a state of the valve body 42 supported with the convex surface portions 43. In the concave surface portion 45, the flow passages 41 open at a bottom 45a in the middle between the opposite convex surface portions 43.

According to this embodiment, the piston 5 has the projected shaft portion 39, so that the flow passages 41 are close to the outer peripheral portion of the piston 5 to open on the concave surface portion 45.

The convex surface portions 43 and concave surface portion 45 are smoothly continuous to each other through curved faces 45b. The bottom 45a of the concave surface portion 45 is flat. The bottom 45a may be formed into a smoothly-curved face.

### [Sliding Door]

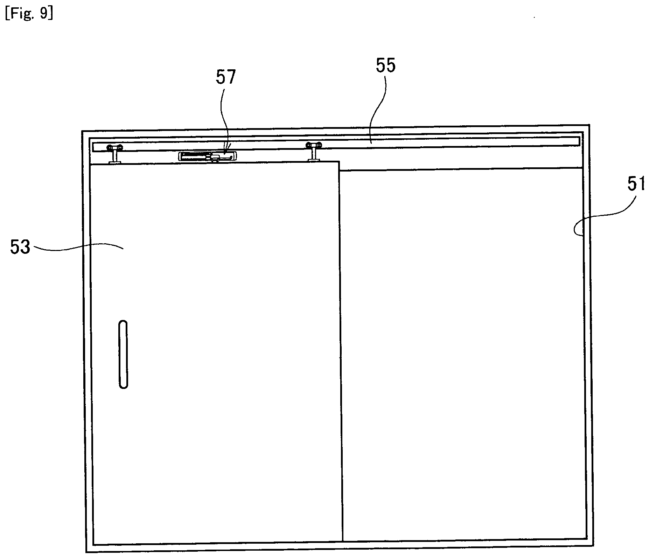

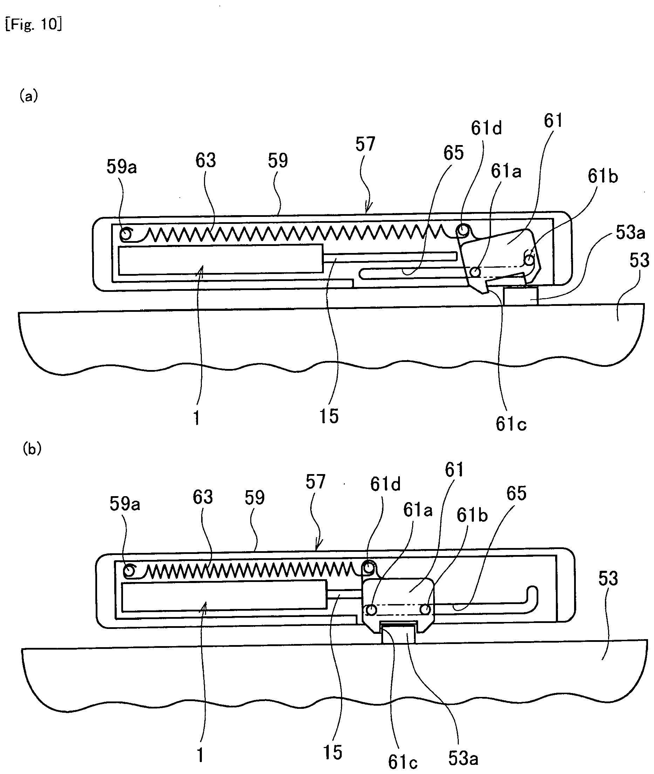

Fig. 9 is an assembly drawing illustrating a sliding door in which a door closer retracting unit is attached, the door closer retracting unit that is provided with the liquid damper device according to the embodiment of the present invention. Fig. 10 illustrates the door closer retracting unit and the perimeter in an operating state in which Fig. 10(a) is an enlarged view in a state starting to retract the sliding door and Fig. 10(b) is an enlarged view in a completely-shut state of the sliding door.

As illustrated in Fig. 9, an opening 51 of a house serves as a stationary side and a sliding door 53 serves as a movable side to be laid into the opening 51. The opening 51 is opened and closed by sliding and moving the sliding door 53 with respect to the opening 51.

A sliding rail 55 is attached to the opening 51 and supports the sliding door 53 to allow the sliding door 53 to linearly move. A door closer retracting unit 57 to which the liquid damper device 1 is applied is attached to the opening 51. The door closer retracting unit 57 automatically retracts and damps the sliding door 53 within a predetermined range just before the sliding door 53 being completely shut.

As illustrated in Fig. 10, the door closer retracting unit 57 is provided with a housing 59, a movable plate 61, the liquid damper device 1, and a coil spring 63.

The housing 59 is fixed on the opening 51 side and an elongated guide hole 65 is formed in the housing 59. The movable plate 61 includes pins 61a and 61b that fit into the elongated guide hole 65, so that the movable plate 61 is supported to be movable as illustrated in Figs. 10(a) and 10(b). To the movable plate 61, a recessed portion 61c allows a protrusion 53a of the sliding door 53 to engage therewith.

The liquid damper device 1 is fixedly supported with the housing 59 and a distal end of the piston rod 15 opposes the movable plate 61.

The coil spring 63 has one end that engages with a spring engaging pin 61d of the movable plate 61 and the other end that engages with a spring engaging pin 59a of the housing 59.

Accordingly, shutting the sliding door 53 from an open state by human work, the protrusion 53a of the sliding door 53 engages with the recessed portion 61c of the movable plate 61 at a position illustrated in Fig. 10(a) just before the sliding door 53 being completely shut. Then, the pin 61b of the movable plate 61 disengages from the elongated guide hole 65.

Due to the disengagement, the movable plate 61 starts to move along the elongated guide hole 65 together with the sliding door 53 while being assisted by the coil spring 63, so that the movable plate 61 shrinks the piston rod 15 of the liquid damper device 1. The damping operation at this time will be explained later.

### [Drawer]

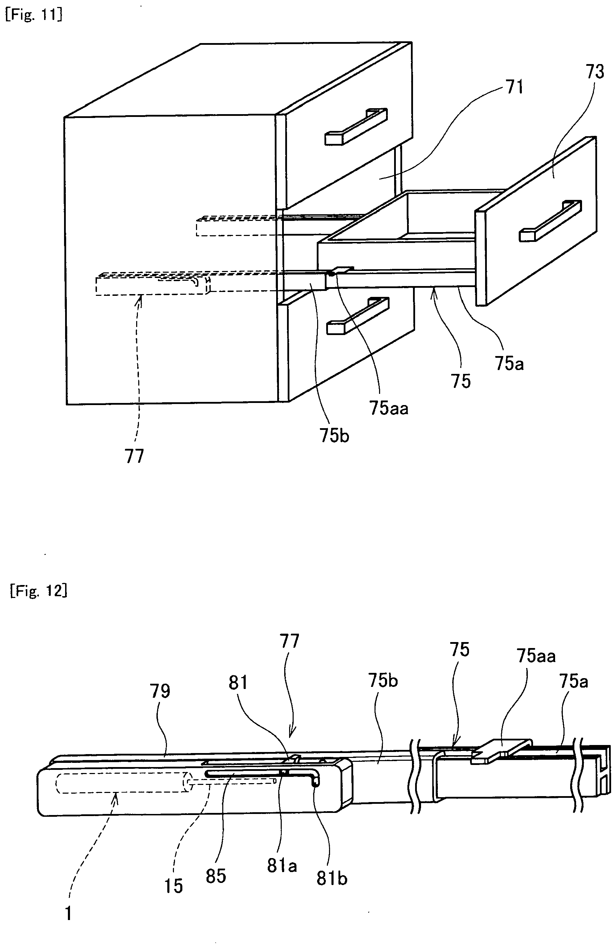

Fig. 11 is an assembly drawing illustrating a drawer in which a retracting unit is attached, the retracting unit that is provided with the liquid damper device according to the embodiment of the present invention. Fig. 12 is an enlarged perspective view illustrating the retracting unit.

As illustrated in Fig. 11, an opening 71 of a cabinet serves as a stationary side and a drawer 73 serves as a movable side to be laid into the opening 71. The drawer 73 is housed into the opening 71 by moving and sliding to the opening 71.

Sliding rails 75 are attached between the opening 71 and the drawer 73 and support the drawer 73 to allow the drawer 73 to linearly move. The sliding rail 75 has nested movable rails 75a and 75b. The movable rail 75a is fixed to the drawer 73 and is provided with an engaging portion 75aa. A retracting unit 77 to which the liquid damper device 1 is applied is attached to the opening 77. The retracting unit 77 automatically retracts and damps the drawer 73 within a predetermined range just before the drawer 73 being completely shut.

As illustrated in Fig. 12, the retracting unit 77 is provided with a housing 79, a movable piece 81, the liquid damper device 1, and a coil spring that is not illustrated.

The housing 79 is fixed inside on the opening 71 side in which an elongated guide hole 85 is formed. The movable piece 81 includes pins 81a and 81b that fit into the elongated guide hole 85, so that the movable piece 81 is supported to be movable along the elongated guide hole 85. An engaging end of the movable piece 81 protrudes upwardly from the housing 79 to engage with the engaging portion 75aa on the drawer 73 side.

The liquid damper device 1 is fixedly supported with the housing 79 and a distal end of the piston rod 15 opposes the movable piece 81.

The coil spring is not illustrated, but it has one end that engages with the movable piece 81 and the other end that engages with the housing 79.

Accordingly, shutting the drawer 79 from an open state by human work, the engaging portion 75aa on the drawer 73 engages with the end of the movable piece 81 just before the drawer 73 being completely shut. Then, the pin 81b of the movable piece 81 disengages from the elongated guide hole 85.

Due to the disengagement, the movable piece 81 starts to move along the elongated guide hole 85 together with the drawer 73 while being assisted by the coil spring, so that the movable piece 81 shrinks the piston rod 15 of the liquid damper device 1. The damping operation at this time will be explained later.

### [Damping Operation]

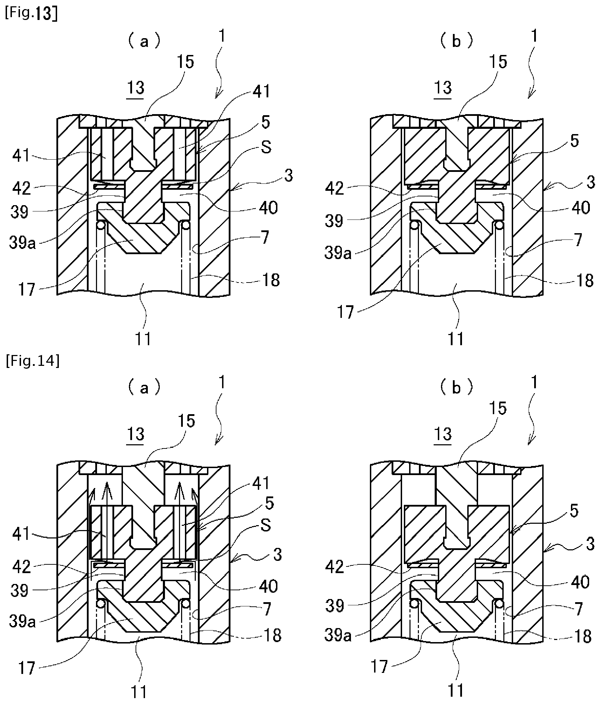

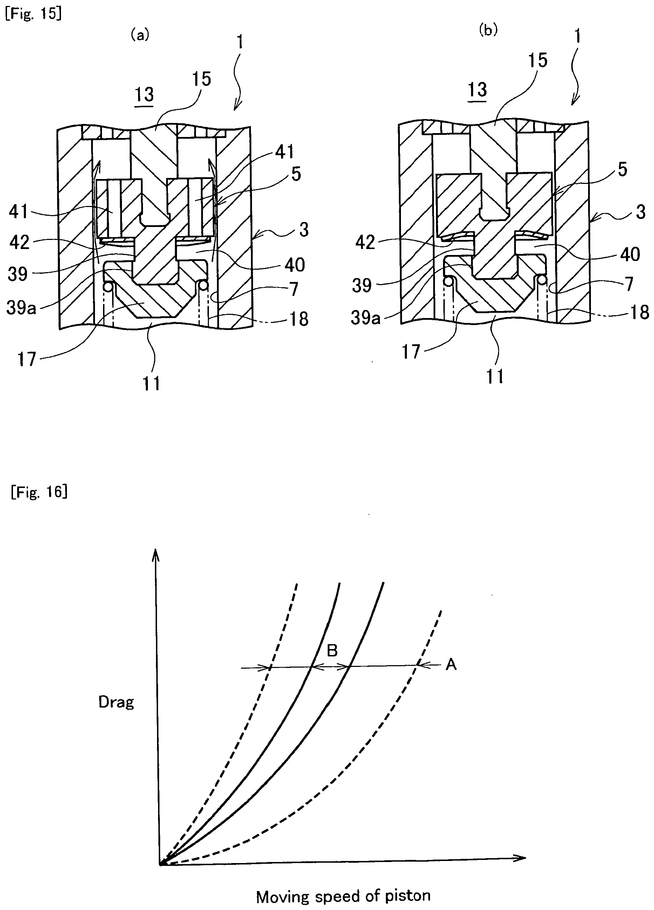

The damping operation of the liquid damper device 1 according to the embodiment will be explained with reference also to Figs. 13 to 15. Figs. 13-15 illustrate the piston and the perimeter of the damper in which Fig. 13 is an enlarged sectional view illustrating the essential parts of the piston and the perimeter when the damper is stationary, Fig. 14 is an enlarged sectional view of the essential parts in a transition state from a medium stage to a latter stage of the piston moving toward the pressure chamber side, and Fig. 15 is an enlarged sectional view of the essential parts in a transition state from an initial stage to the medium stage of the piston moving toward the pressure chamber side. In Figs. 13-15, (a) is an enlarged sectional view corresponding to Fig. 8 and (b) is an enlarged sectional view orthogonal to (a). Fig. 16 is a graph illustrating a relationship between a drag and a moving speed of the piston during an operating state as well as a comparative example. In this case, the comparative example is directed to one illustrated in Fig. 17.

The liquid damper device 1 according to the embodiment is attached as what damps the shutting operation of the sliding door 53 or drawer 73 as mentioned above. The shutting operation of the sliding door 53 (drawer 73) is assisted by the spring as mentioned above.

Therefore, shutting the sliding door 53 (drawer 73) from an open state by human work, the liquid damper device 1 starts to operate just before the sliding door 53 (drawer 73) being completely shut as mentioned above.

With the operation, the liquid damper device 1 performs damping and the sliding door 53 (drawer 73) is automatically shut by the assist of the spring even if a hand is disengaged from the sliding door 53 (drawer 73). When the liquid damper device 1 starts it's operation in the shutting operation of the sliding door 53 (drawer 73), the piston rod 15 shrinks into the cylinder 3 by the external force as illustrated in Fig. 2.

The piston 5 operates simultaneously with the shrinking operation of the piston rod 15 to axially move toward the pressure chamber 11 side. When the piston axially moves, the valve body 42 receives the pressure from the silicone oil and moves toward a closing position.

In the transition state from the initial stage to the medium stage of the liquid damper device 1 starting it's operation, a speed of the sliding door 53 (drawer 73) is high to generate high load. The liquid damper device 1 increases a drag to strongly damp the sliding door 53 (drawer 73) and reduce the speed as illustrated in Fig. 15.

Namely, when the moving speed of the piston 5 is high, the valve body 42 bends toward the concave surface portion 45 side with the support of the convex surface portions 43 by the pressure from the silicone oil. Therefore, the gap S between the valve body 42 and the concave surface portion 45 of the piston 5 becomes smaller according to the speed of the piston 5. At a given speed or more, the valve body 42 comes in contact with the bottom 45a to close the openings of the flow passages 41. In this way, the drag acting on the piston 5 increases to perform strongly damping at the high load due to the moving speed of the piston 5 being high in the transition state from the initial stage to the medium stage.

With the reduction of the speed of the sliding door 53 (drawer 73) through the damping, the load becomes low in the transition state from the middle stage to the latter stage. This clears the bend from the valve body 42, so that the valve body 42 almost never bends to be supported with the pair of convex surface portions 43 at the two point on the outer peripheral edge portion. Accordingly, the gap S is defined between the valve body 42 and the concave surface portion 45 of the piston 5. The silicone oil in the pressure chamber 11 side passes through the gap S between the valve body 42 and the concave surface portion 45 of the piston 5 and also a gap between the outer peripheral surface of the piston 5 and the inner peripheral surface of the cylinder 3, so that the silicone oil moves to the contra pressure chamber 13 side and produces damping lightly.

With the light damping from the middle stage to the latter stage and the strong damping from the initial stage to the middle stage, the liquid damper device 1 allows the sliding door 53 (drawer 73) to be silently and smoothly shut in a short time.

In such damping operation, the present embodiment employs the configuration that easily bends the valve body 42 toward the shallow concave surface portion 45 side, so that the damping characteristic can be widely adjusted in the range "A" between the dotted lines in Fig. 16 according to the adjustment of the hardness of the valve body 42.

In contrast, the comparative example of Fig. 17 bends the plate 109 (valve body) while the inner side of the plate 109 is supported with the corner 107 on the edge of the protrusion 107. This requires higher load to bend the plate 109 and narrows an adjustable range of a damping characteristic according to the adjustment of the hardness of the plate 109 down to the range "B" in Fig. 16.

### [Effects of Embodiment 1]

According to the embodiment of the present invention, the liquid damper device 1 has the cylinder 3 in which the silicone oil is enclosed, the piston 5 disposed in the cylinder 3 to divide the inside of the cylinder 3 into the pressure chamber 11 side and the contra pressure chamber 13 side and movable toward the pressure chamber 11 side and the contra pressure chamber 13 side, the piston 5 being provided with the piston rod 15 protruding outwardly from the cylinder 3, the flow passages 41 formed through the piston 5 to communicate with the pressure chamber 11 side and the contra pressure chamber 13 side so that the silicone oil moves to the pressure chamber 11 side or the contra pressure chamber 13 side to cause the pressure to be adjusted, the flexible valve body 42 operating toward the closing position with respect to the flow passages 41 when the piston 5 moves toward the pressure chamber 11 side and operating toward the opening position with respect to the flow passages 41 when the piston 5 moves toward the contra pressure chamber 13 side. The liquid damper device 1 is characterized in that the convex surface portions 43 are formed at two portions opposite to each other in the diametral direction on the outer peripheral portion of the surface 37 of the piston 5 in the pressure chamber 11 side to support the outer peripheral portion of the valve body 42 at two point, and the concave surface portion 45 is formed on the surface 37 of the piston 5 in the pressure chamber 11 side to allow the gap S for narrowing down to be defined between the valve body 42 and the concave surface portion 45 in the state of the valve body 42 supported with the convex surface portions 43 to open the flow passages 41.

Therefore, when the piston 5 moves toward the pressure chamber 11 side in the cylinder 3, the valve body 42 receives the pressure of the silicone oil and moves to come into contact with the convex surface portions 43. With the contact, at the low load, the fixed gap S is defined between the valve body 42 and the concave surface portion 45 of the piston 5.

The silicone oil in the pressure chamber 11 is narrowed down by the gap S between the valve body 42 and the piston 5 and then passes through the flow passages 41 to the contra pressure chamber 13 side. The silicone oil also moves to the contra pressure chamber 13 side through the gap between the outer peripheral surface of the piston 5 and the inner peripheral surface 3 of the cylinder 3.

Due to these movements, the silicone oil provides the piston 5 with the light drag to damp the movement of the piston 5.

At the high load, the valve body 42 bends at the middle portion between the convex surface portions 43 by the pressure from the silicone oil, to also come into contact with the bottom 45a of the concave surface portion 45 of the piston 5. With this contact, the flow passages 41 are closed so that movement of the silicone oil is performed almost exclusively through the gap between the outer peripheral surface of the piston 5 and the inner peripheral surface of the cylinder 3. This increases the drag of the silicone oil to the piston 5.

Therefore, even if the valve body 42 closes the flow passages 41, the valve body 42 comes into contact with the concave surface portion 45 without extreme deformation. This improves the durability of the valve body 42.

The valve body 42 bends along the shallow concave surface portion 45 to close the flow passages 41. This reduces the required force to bend the valve body 42. As a result, it expands the adjustable range "A" of the relationship between the moving speed of the piston and the drag with respect to the adjustable range "B" of the comparative example.

### [Others]

The continuous curved face is not necessarily to be formed between the convex surface portion 43 and concave surface portion 45. An edge line may be present between the convex surface portion and the concave surface portion. Even in this case, the outer peripheral edge of the valve body 42 slightly lifts from the convex surface portions 43 when the valve body 42 comes into contact with the concave surface portion 45. No force acts on the valve body 42 by constraint.

### DESCRIPTION OF NUMERALS

- 1: Liquid damper device
- 3: Cylinder
- 5: Piston
- 11: Pressure chamber
- 13: Contra pressure chamber
- 15: Piston rod
- 41: Flow passage
- 42: Valve body
- 43: Convex surface portion
- 45: Concave surface portion
- 45a: Bottom
- S: gap

## Claims

1. A liquid damper device having
a cylinder (3) in which a working fluid is enclosed,
a piston (5) disposed in the cylinder (3) to divide an inside of the cylinder into a pressure chamber side (11) and a contra pressure chamber side (13) and movable toward the pressure chamber side and the contra pressure chamber side, the piston (5) being provided with a piston rod (15) protruding outwardly from the cylinder (3),
a flow passage (41) formed through the piston (5) to communicate with the pressure chamber side (11) and the contra pressure chamber side (13) so that the working fluid moves to the pressure chamber side or the contra pressure chamber side to cause a pressure to be adjusted, and
a flexible valve body (42) operating toward a closing position with respect to the flow passage (41) when the piston (5) moves toward the pressure chamber side (11) and operating toward an opening position with respect to the flow passage (41) when the piston (5) moves toward the contra pressure chamber side (13), whereby convex surface portions (43) are formed on an outer peripheral portion of a surface of the piston (5) in the pressure chamber side (11) to support an outer peripheral portion of the valve body (42), and
a concave surface portion (45) is formed on the surface of the piston (5) in the pressure chamber side (11) to allow a gap (S) for narrowing down to be defined between the valve body (42) and the concave surface portion (45), in a state of the valve body (42) supported with the convex surface portions (45), to open the flow passage (41), **characterized in that**
the valve body (42) receives a pressure of the working fluid and moves to come into contact with the convex surface portions (43), when the piston
(5) moves in the cylinder (3) toward the pressure chamber side (11), which forms the fixed gap (S) between the valve body (42) and the concave surface portion (45) of the piston (5) at low load so that the working fluid in the pressure chamber side (11) is narrowed down by the gap (S) between the valve body (42) and the concave surface portion (45) and passes through the flow passage (41) to the contra pressure chamber side (13),
and bends along the concave surface portion (45) at a middle portion between the convex surface portions (43) by a pressure of the working fluid at high load and comes into contact with the concave surface portion (45) of the piston (5) to close the flow passage (41).

2. The liquid damper device of claim 1, wherein
two convex surface portions (43) are formed to locally support the outer peripheral portion of the valve body (42) at two points opposite to a diametral direction of the piston (5), and
the concave surface portion (45) is formed between the two convex surface portions (43).

3. The liquid damper device of claim 1 or 2, wherein
the convex surface portions (43) and the concave surface portion (45) are continuous to each other through a curved face formed therebetween.

4. The liquid damper device of claim 2 or 3, wherein
a bottom of the concave surface portion (45) is flat.

## Patentansprüche

1. Eine Flüssigkeitsdämpfungsvorrichtung mit
einem Zylinder (3), in dem eine Arbeitsflüssigkeit enthalten ist,
einem in dem Zylinder (3) angeordneten Kolben (5) zur Aufteilung des Inneren des Zylinders in eine Druckkammerseite (11) und eine Gegendruckkammerseite (13), wobei der Kolben (5) zu der Druckkammerseite und der Gegendruckkammerseite bewegbar ist und der Kolben (5) mit einer sich aus dem Zylinder heraus erstreckenden Kolbenstange (15) versehen ist,
einem Durchflusskanal (41), der in dem Kolben (5) ausgebildet ist, um mit der Druckkammerseite (11) und der Gegendruckkammerseite (13) zu kommunizieren, so dass das Arbeitsfluid sich zu der Druckkammerseite und der Gegendruckkammerseite (13) bewegt, so dass ein Druck eingestellt wird, und
einem flexiblen Ventilkörper (42), der sich in Bezug auf den Durchflusskanal (41) in eine geschlossene Position bewegt, wenn sich der Kolben (5) zu der Druckkammerseite (11) bewegt, und der sich in Bezug auf den Durchflusskanal (41) in eine geöffnete Position bewegt, wenn sich der Kolben (5) zu der Gegendruckkammerseite (13) bewegt,
wobei
konvexe Oberflächenabschnitte (43) an einem äußeren peripheren Abschnitt einer Oberfläche des Kolbens (5) in der Druckkammerseite (11) ausgebildet sind, um einen äußeren peripheren Abschnitt des Ventilkörpers (42) zu tragen, und
ein konkaver Oberflächenabschnitt (45) an einer Oberfläche des Kolbens (5) in der Druckkammerseite (11) ausgebildet ist, um einem Spalt (S), der zwischen dem Ventilkörper (42) und dem konkaven Oberflächenabschnitt (45) definiert ist, zu erlauben, sich nach unten zu verringern, in einem Zustand des Ventilkörpers (42), in dem der Ventilkörper (42) von den konvexen Oberflächenabschnitten (43) getragen wird, um den Durchflusskanal (41) zu öffnen,
**dadurch gekennzeichnet, dass**
der Ventilkörper (42) von dem Arbeitsfluid einen Druck erhält und sich bewegt, um mit den konvexen Oberflächenabschnitten (43) in Kontakt zu kommen, wenn sich der Kolben (5) in den Zylinder (3) zu der Druckkammerseite (11) bewegt, wodurch sich der feste Spalt (S) zwischen dem Ventilkörper (42) und dem konkaven Oberflächenabschnitt (45) bei geringer Last ausbildet, so dass sich das Arbeitsfluid in der Druckkammerseite (11) durch den Spalt (S) nach unten verringert und durch den Durchflusskanal (41) zu der Gegendruckkammerseite (13) hindurchtritt, und sich entlang des konkaven Oberflächenabschnitts (45) in einem mittleren Abschnitt zwischen den konvexen Oberflächenabschnitten (43) bei einem Druck des Arbeitsfluid bei hoher Last durchbiegt und mit dem konkaven Oberflächenabschnitt (45) des Kolbens (5) in Kontakt kommt, um den Durchflusskanal (41) zu verschließen.

2. Die Flüssigkeitsdämpfungsvorrichtung nach Anspruch 1, wobei zwei konvexe Oberflächenabschnitte (43) ausgebildet sind, um den äußeren peripheren Abschnitt des Ventilkörpers (42) an zwei Punkten, die einer diametralen Richtung des Kolbens (5) gegenüberliegen, lokal zu tragen, und der konkave Oberflächenabschnitt (45) zwischen den beiden konvexen Oberflächenabschnitten (43) ausgebildet ist.

3. Die Flüssigkeitsdämpfungsvorrichtung nach Anspruch 1 oder 2, wobei die konvexen Oberflächenabschnitte (43) und der konkave Oberflächenabschnitt (45) durch eine zwischen diesen ausgebildeten gekrümmten Abschnitt ineinander übergehen.

4. Die Flüssigkeitsdämpfungsvorrichtung nach Anspruch 2 oder 3, wobei ein Boden des konkaven Oberflächenabschnitts (4) flach ist.

## Revendications

1. Dispositif amortisseur à liquide comportant
un cylindre (3) dans lequel un fluide de travail est enfermé,
un piston (5) disposé dans le cylindre (3) pour diviser un intérieur du cylindre en un côté chambre de pression (11) et un côté chambre de contre-pression (13) et mobile vers le côté chambre de pression et le côté chambre de contre-pression, le piston (5) étant doté d'une tige de piston (15) faisant saillie vers l'extérieur à partir du cylindre (3),
un passage d'écoulement (41) formé à travers le piston (5) pour communiquer avec le côté chambre de pression (11) et le côté chambre de contre-pression (13) de sorte que le fluide de travail se déplace vers le côté chambre de pression ou le côté chambre de contre-pression pour amener une pression à être ajustée, et
un corps de soupape flexible (42) fonctionnant vers une position de fermeture par rapport au passage d'écoulement (41) lorsque le piston (5) se déplace vers le côté chambre de pression (11) et fonctionnant vers une position d'ouverture par rapport au passage d'écoulement (41) lorsque le piston (5) se déplace vers le côté chambre de contre-pression (13),
moyennant quoi des parties à surface convexe (43) sont formées sur une partie périphérique externe d'une surface du piston (5) du côté chambre de pression (11) pour supporter une partie périphérique externe du corps de soupape (42), et
une partie à surface concave (45) est formée sur la surface du piston (5) du côté chambre de pression (11) pour permettre à un espace (S) de restriction d'être défini entre le corps de soupape (42) et la partie à surface concave (45), dans un état du corps de soupape (42) supporté par les parties à surface convexe (45), pour ouvrir le passage d'écoulement (41),
**caractérisé en ce que**
le corps de soupape (42) reçoit une pression du fluide de travail et se déplace pour venir en contact avec les parties à surface convexe (43), lorsque le piston (5) se déplace dans le cylindre (3) vers le côté chambre de pression (11), ce qui forme l'espace fixe (S) entre le corps de soupape (42) et la partie à surface concave (45) du piston (5) à faible charge de sorte que le fluide de travail du côté chambre de pression (11) est restreint par l'espace (S) entre le corps de soupape (42) et la partie à surface concave (45) et passe à travers le passage d'écoulement (41) jusqu'au côté chambre de contre-pression (13), et s'incurve le long de la partie à surface concave (45) au niveau d'une partie centrale entre les parties à surface convexe (43) par une pression du fluide de travail à charge élevée et vient en contact avec la partie à surface concave (45) du piston (5) pour fermer le passage d'écoulement (41).

2. Dispositif amortisseur à liquide selon la revendication 1, dans lequel
deux parties à surface convexe (43) sont formées pour supporter localement la partie périphérique externe du corps de soupape (42) au niveau de deux points opposés suivant une direction diamétrale du piston (5), et
la partie à surface concave (45) est formée entre les deux parties à surface convexe (43).

3. Dispositif amortisseur à liquide selon la revendication 1 ou 2, dans lequel
les parties à surface convexe (43) et la partie à surface concave (45) sont continues les unes avec les autres à travers une face incurvée formée entre celles-ci.

4. Dispositif amortisseur à liquide selon la revendication 2 ou 3, dans lequel
un fond de la partie à surface concave (45) est plat.
